(19) Europäisches Patentamt
European Patent Office
Office européen des brevets

(11) Veröffentlichungsnummer : **0 383 216 B1**

(12) **EUROPÄISCHE PATENTSCHRIFT**

(45) Veröffentlichungstag der Patentschrift :
08.11.95 Patentblatt 95/45

(51) Int. Cl.⁶ : **G11B 11/10,** H01F 10/12, H01F 41/18, H01F 10/08

(21) Anmeldenummer : 90102647.6

(22) Anmeldetag : 10.02.90

(54) Magnetooptische Schicht und Verfahren zu ihrer Herstellung.

(30) Priorität : 16.02.89 DE 3904611

(43) Veröffentlichungstag der Anmeldung :
22.08.90 Patentblatt 90/34

(45) Bekanntmachung des Hinweises auf die
Patenterteilung :
08.11.95 Patentblatt 95/45

(84) Benannte Vertragsstaaten :
AT BE CH DE DK ES FR GB IT LI NL SE

(56) Entgegenhaltungen :
EP-A- 0 126 589
EP-A- 0 225 141
EP-A- 0 227 480
DE-A- 3 536 210
GB-A- 2 169 742
GB-A- 2 175 160
US-A- 4 740 430
PATENT ABSTRACTS OF JAPAN vol. 12, no.
470 (P-798)(3317) 09 Dezember 1988, & JP-A-63
188843 (NEC HOME ELECTRONICS LTD.) 04
August 1988,

(56) Entgegenhaltungen :
JOURNAL OF APPLIED PHYSICS. vol. 61, no.
7, 01 April 1987, NEW YORK US Seiten 2610 -
2616; Takayama et al.: "Magnetic and magne-
to-optical properties of Tb-Fe-Co amorphous
films"
JOURNAL OF VACUUM SCIENCE AND TECH-
NOLOGY: PART A. vol. 5, no. 4, Juli 1987, NEW
YORK US Seiten 1949 - 1951; Asari et al.:
"Preparation of a magneto-optical disk using
a rare earth-transition metal alloy target"
SOLID STATE TECHNOLOGY. vol. 31, no. 3,
März 1988, WASHINGTON US Seiten 107 -112;
Schultheiss et al.: "Production Technology for
Magnetooptic Data Storage Media"

(73) Patentinhaber : HOECHST
AKTIENGESELLSCHAFT
D-65926 Frankfurt am Main (DE)

(72) Erfinder : Dössel, Karl-Friedrich, Dr.
Dipl.-Chem.
Fritz Kalle Strasse 8
D 6200 Wiesbaden (DE)
Erfinder : Schlosser, Ernst-Günther, Dr.
Dipl.-Phys.
Andreas Faust Strasse 13
D-6233 Kelkheim (DE)
Erfinder : Fischer, Bernd, Dr. Dipl.-Phys.
Spessartstrasse 118
D-6200 Wiesbaden-Nordenstadt (DE)
Erfinder : Schmidt, Günther. Dr. Dipl.-Phys.
Germanenweg 13
D-6272Niederhausen (DE)

## Beschreibung

Die Erfindung betrifft eine magnetooptische Schicht aus einer amorphen Seltenerd-Übergangsmetall-Legierung mit einer magnetischern Anisotropie, deren leicht magnetisierbare Achse senkrecht zu der Oberfläche steht.

Amorphe magnetooptische Materialien mit einer solchen uniaxialen senkrechten Anisotropie sind bekannt. Am meisten verbreitet sind Legierungen von Seltenerdmetallen, wie Gadolinium, Terbium, Dysprosium, mit Übergangsmetallen, wie Eisen und Kobalt, denen gegebenenfalls noch weitere Komponenten zugesetzt sind. Die magnetischen Eigenschaften dieser Legierungen hängen sehr stark von ihrer Zusammensetzung ab.

Aus der GB-A 2.169.742 ist ein Verfahren zum Herstellen einer magnetooptischen Schicht bekannt, bei dem das Aufsputtern der Seltenerd-Übergangsmetall-Legierung dynamisch erfolgt, indem das zu beschichtende Substrat relativ zu zwei Sputtertargets bewegt wird, die in einer gemeinsamen Ebene angeordnet sind. Bei dem Verfahren entsteht ein Mehrschichtsystem mit alternierenden Schichten, bei denen sich die Konzentrationen der Seltenerd-Übergangsmetall-Legierungen von Schicht zu Schicht sprunghaft ändern, jedoch in der einzelnen Schicht über die Tiefe der Schicht konstant sind. Eine kontinuierliche Änderung der Konzentration über die Schichtdicke ist nicht vorgesehen.

In der DE-OS 33 09 483 sind magnetooptische Aufzeichnungsmaterialien aus amorphen ternären Legierungen auf der Basis von Terbium, Eisen und Kobalt beschrieben, die für Kobaltanteile $\leqq 40$ % einen näherungsweise linearen Zusammenhang des Winkels der Kerr-Drehung und der Curie-Temperataur mit dem Kobaltgehalt der Legierungen zeigen. Das gleiche gilt für die magnetooptischen Aufzeichnungsmedien, die in der DE-OS 35 36 210 und der Zeitschrift "Journal of Applied Physics", 64 (1988), S. 262, beschrieben sind. So ist aus der DE-OS 35 36 210 ein magnetooptisches Aufzeichnungsmedium aus einem amorphen Film der Zusammensetzung Seltenerd-Übergangsmetalle mit einer Kompensationstemperatur von 50 bis 200 °C oder einer solchen von 0 °C oder weniger bekannt. Bei Verwendung eines amorphen Films des Tb-Fe-Co-Systems wird die Kompensationstemperatur von 50 bis 200 °C durch eine Zusammensetzung mit 24 bis 30 Atomprozent Terbium, 7 bis 20 Atomprozent Kobalt, Rest Eisen, erreicht, während eine Kompensationstemperatur von 0 °C oder weniger durch eine Zusammensetzung mit 18 bis 21,5 Atomprozent Terbium, 8 bis 10 Atomprozent Kobalt und dem Rest Eisen erzielt wird. Diese Zusammenhänge sind in der Offenlegungschrift DE 35 36 210 ausführlich erläutert.

In den Zeitschriften "Journal of Applied Physics", 61 (1987), ab Seite 2610, und "J. Vac. Sci. Technol. A5 (1987), ab Seite 1949 wird darauf hingewiesen, daß beispielsweise die Erhöhung des Terbiumgehalts um 1 Atomprozent die Kompensationstemperatur bis zu 40 °C verschieben kann.

Die Kontrolle der Zusammensetzung der Schicht ist daher sehr wichtig für die Auslegung des Sputtervorgangs und einer entsprechenden Produktionsanlage, wie aus der Zeitschrift "Solid State Technology", März 1988, S. 107, hervorgeht.

Im allgemeinen wird angegeben, daß die Abweichung der Tb-Konzentration von der mittleren Konzentration im Schichtvolumen weniger als 0,5 % betragen soll.

Die angestrebte Gleichmäßigkeit der Zusammensetzung der Legierungsbestandteile im Tiefenprofil einer magnetooptischen Aufzeichnungsschicht sowie die Bemühungen, die Legierungszusammensetzung über die Beschichtungsbreite und -länge konstant zu halten, erfordern einen großen Aufwand, z.B. rotieren die zu beschichtenden Platten während des Beschichtungsvorgangs um ihre eigene Drehachse und laufen gleichzeitig auf einem größeren Kreis um.

Ein weiterer Nachteil bekannter magnetooptischer Aufzeichnungsmaterialien ist ihre große Korrosionsanfälligkeit.

Zur Vermeidung bzw. Verhinderung dieses Nachteils wird der Zusatz verschiedener korrosionsverhindernder Elemente zu den magnetooptischen Legierungen empfohlen (GB-A - 2.175.160 und EP-A1 - 0 229 292). Der Zusatz derartiger Elemente zum Gesamtvolumen der magnetooptischen Aufzeichnungsschicht verbessert die Korrosionsbeständigkeit, jedoch zu Lasten anderer erwünschter Eigenschaften, wie die eines möglichst großen Kerr-Winkels, einer hohen Koerzitivfeldstärke, hoher Schreibempfindlichkeit, großen Signal-zu-Rausch-Verhältnisses und dergleichen. Bei dem magnetooptischen Aufzeichnungsmedium gemäß der EP-A1 - 0 229 292 werden zu einem ersten Element weitere korrosionsverhindernde Elemente zugesetzt, um eine Anreicherung der korrosionsverhindernden Elemente an der Oberfläche des Aufzeichnungsmediums zu erreichen. Dabei ist nachteilig, daß durch den Zusatz weiterer Elemente die erwünschten magnetooptischen Eigenschaften noch stärker beeinträchtigt werden können.

In der US-PS 4, 740, 430 sind dünne Barriereschichten aus korrosionsverhindernden Elementen beschrieben. Dabei handelt es sich um eine diskrete, mehrlagige Struktur des magnetooptischen Aufzeichnungsmediums.

Um eine hohe Speicherdichte der magnetooptischen Aufzeichnungsmaterialien zu erreichen, müssen stabile, möglichst kleine Domänen in der magnetooptischen Aufzeichnungsschicht erzeugt werden können. Voraussetzung hierfür ist es, daß das Produkt aus Sättigungsmagnetisierung $M_s$ und Koerzitivfeldstärke $H_c$ möglichst groß ist (Kryder et al., SPIE Proc. 420, S. 236 (1983)). Für bekannte magnetooptische Aufzeichnungsmaterialien wird ein möglichst großes Produkt aus Sättigungsmagnetisierung und Koerzitivfeldstärke nur in einem engen Temperaturbereich um die Kompensationstemperatur $T_{comp}$ erreicht.

In neuerer Zeit wurden magnetooptische Aufzeichnungsmaterialien beschrieben, die sich für das direkte Überschreiben der Information eignen (US-PS 4,694,358, US-PS 4,649,519, EP-A2 - 0 225 141, EP-A2 - 0 227 480 und EP-A2 - 0 217 096). In allen Fällen wird ein Aufbau des magnetooptischen Aufzeichnungsmediums verwendet, bei dem zwei getrennte Schichten mit unterschiedlichen magnetischen Eigenschaften übereinander geschichtet sind.

In den Druckschriften EP-A2 - 0 217 096 und EP-A2 - 0 227 480 sind magnetooptische Aufzeichnungsmedien beschrieben, bei denen eine thermisch isolierende Zwischenschicht zwischen der magnetooptischen Aufzeichnungsschicht und einer magnetischen Schicht, die ein Vormagnetisierungsfeld erzeugt, im Aufbau vorhanden ist. In den übrigen, voranstehend erwähnten Literaturstellen werden solche Zwischenschichten empfohlen, da es anderenfalls zur Diffusion von Legierungskomponenten in die Magnetschicht kommen kann. Eine derartige Diffusion von Legierungskomponenten ändert selbstverständlich die Eigenschaften des magnetooptischen Aufzeichnungsmediums.

Ein anderer Weg zur Erhöhung der Langzeitstabilität eines magnetooptischen Speichers wird in dem Verfahren gemäß der DE-OS 36 42 161 vorgeschlagen, bei dem während und/oder nach der Abscheidung einer dielektrischen Schicht, einer magnetooptischen Schicht sowie einer Deckschicht nacheinander auf einem Substrat in nahezu trockener Atmosphäre in einem Temperaturbereich von Raumtemperatur bis knapp unterhalb der Kristallisationstemperatur der magnetooptischen Schicht getempert wird.

Aus der japanischen Offenlegungsschrift 188,843/88 ist ein Verfahren zum Herstellen einer fotomagnetischen Platte bekannt, bei der die fotomagnetische Aufzeichnungsschicht in der Weise aufgesputtert wird, daß das Substrat an drei Targets aus Seltenerdmetall und Übergangsmetall vorbeigeführt wird. Das mittlere Target ist parallel zu der Bewegungsbahn des Substrats angeordnet, während jeweils ein Target vor und hinter dem mittleren Target in Bewegungsrichtung des Substrats unter einem vorgegebenen Winkel gegenüber dem mittleren Target angebracht ist. Die Zusammensetzung des so erhaltenen fotomagnetischen Aufzeichnungsfilms auf dem Substrat ist gleichmäßig.

Aufgabe der Erfindung ist es, eine magnetooptische Schicht der eingangs beschriebenen Art zu schaffen, die einfach und reproduzierbar herstellbar ist, eine hohe Korrosionsbeständigkeit gegenüber Feuchtigkeit und/oder Sauerstoff besitzt, hohe Speicherdichten ermöglicht und für das direkte Überschreiben geeignet ist. Im Rahmen dieser Aufgabe soll auch ein Herstellungsverfahren für eine derartige magnetooptische Schicht geschaffen werden.

Diese Aufgabe wird erfindungsgemäß dadurch gelöst, daß die magnetooptische Schicht einen Gradienten der Konzentration der Zusammensetzung über der Tiefe aufweist und in einem Temperaturbereich von $\Delta T = 100\ °C$, der von zwei Kompensationstemperaturen $T_{comp2}$ und $T_{comp2}$ begrenzt wird, bei jeder Temperatur innerhalb dieses Bereiches eine Koerzitivfeldstärke von größer als 640 kA/m (8 kOe) besitzt.

In Ausgestaltung der Erfindung besteht die Schichtlegierung aus Terbium, Gadolinium, Dysprosium, Eisen und Kobalt oder aus Terbium, Dysprosium, Eisen und Kobalt. Des weiteren kann die Legierung aus Terbium, Gadolinium, Dysprosium und Kobalt aus aus Terbium, Dysprosium und Kobalt allein bestehen. Zweckmäßigerweise hat eine Targetlegierung zum Aufsputtern der Schichtlegierung eine Zusammensetzuung nach der Formel

$$(Tb_xDy_{1-x})_y (Fe_zCo_{1-z})_{1-y},$$

mit

$$0 \leqq x \leqq 1$$
$$0,15 \leqq y \leqq 0,30$$

und

$$0,60 \leqq z \leqq 1.$$

In Weiterbildung der Erfindung befindet sich in einer oder beiden Oberflächen der magnetooptischen Schicht eine gegenüber der durchschnittlichen Konzentration der Zusammensetzung erhöhte Konzentration an Seltenerdmetallen.

Ebenso ist es möglich, daß sich in einer oder beiden Oberflächen der magnetooptischen Schicht eine gegenüber der durchschnittlichen Konzentration erhöhte Konzentration an Übergangsmetallen befindet.

Die weitere Ausgestaltung der magnetooptischen Schicht ergibt sich aus den Merkmalen der Patentansprüche 9 bis 15.

Eine magnetooptische Schicht nach der Erfindung ist Bestandteil eines magnetooptischen Aufzeichnungsmediums, bei dem die magnetooptische Schicht zwischen zwei Sperrschichten aus SiN, SiON, SiAlON,

AIN, AION, TaO$_x$ oder NbO$_x$ zum Schutz gegen Feuchtigkeit und/oder Sauerstoff angeordnet ist. Die eine Sperrschicht ist einseitig von einem Substrat, die andere von einem Metallspiegel, einer Lack- oder einer Kleberschicht und einem zweiten Substrat abgedeckt.

Das erfindungsgemäße Verfahren zur Herstellung einer magnetooptischen Schicht nach der Erfindung ist im Anspruch 25 enthalten.

Die weiteren Verfahrensmaßnahmen zum Herstellen der magnetooptischen Schicht ergeben sich aus den Merkmalen der Patentansprüche 26 bis 34.

Die magnetooptischen Schichten nach der Erfindung finden Verwendung für ein direkt überschreibbares magnetooptisches Aufzeichnungsmedium und in einem System, in dem eine Modulation des magnetischen Feldes oder eine Modulation der Laserenergie während des Einschreibens der Information erfolgt.

Die Erfindung wird im folgenden anhand der Zeichnungen näher erläutert. Es zeigen:

| | |
|---|---|
| Figur 1 | in schematischer Darstellung die Anordnung eines Targets in einer Ebene parallel zu der Bahn von zu beschichtenden Substraten, |
| Figur 2 | eine schematische Anordnung von mehreren Targets in einer gemeinsamen Parallelebene zu der Bahn der zu beschichtenden Substrate, |
| Figur 3 | schematisch die Zusammensetzung einer magnetooptischen Schicht auf der Basis Seltenerdmetalle SE und Übergangsmetalle ÜM über der Tiefe der Schicht, |
| Figur 4 | die Blendencharakteristik einer zwischen Targets und Substrat zwischengeschalteten Blende und die Sputterraten über der Tiefe der magnetooptischen Schicht, |
| Figuren 5A bis 5D | eine Draufsicht auf verschiedene Blenden mit unterschiedlichen Blendenöffnungen, die zwischen den Targets und den Substraten angeordnet sind, |
| Figuren 6A bis 6D | schematisch die Zusammensetzung von magnetooptischen Schichten über den Schichttiefen, die mit den Blenden gemäß den Figuren 5A bis 5D erhalten werden, |
| Figur 7 | den Zusammenhang zwischen der Koerzitivfeldstärke Hc und der Temperatur T verschiedener magnetooptischen Schichten, und |
| Figur 8 | den Zusammenhang zwischen dem Kehrwert 1/Hc der Koerzitivfeldstärke und der Temperatur T der magnetooptischen Schichten nach Fig. 7. |

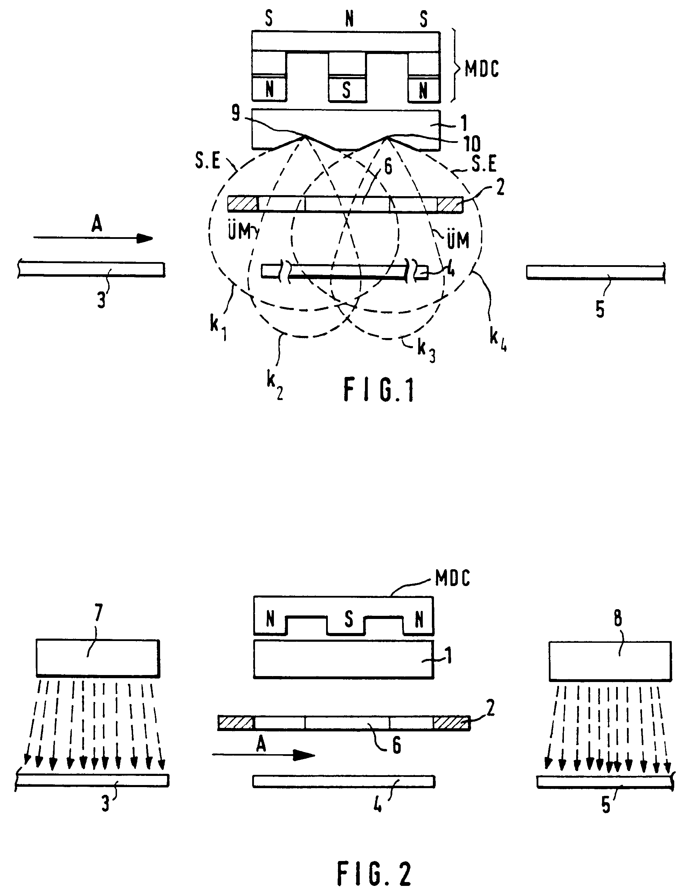

In Figur 1 ist schematisch eine Anordnung zum Herstellen einer magnetooptischen Schicht auf Substraten 3, 4, 5 dargestellt, die in Richtung des Pfeils A an einer Sputterkathode in Gestalt eines Targets 1 vorbeigeführt werden. Zwischen dem Target 1 und der Bahnebene der Substrate 3, 4, 5 befindet sich eine Blende 2 mit einer Öffnung 6, die, wie später noch näher ausgeführt werden wird, in bezug auf die Mitte der Sputterkathode bzw. des Targets 1 unsymmetrisch ausgebildet sein kann.

Das Target 1 hat eine Zusammensetzung aus zumindest einem Element der Seltenerdmetalle SE und zumindest einem Übergangsmetall ÜM. Bei den Seltenerdmetallen handelt es sich im allgemeinen um Terbium, Gadolinium und Dysprosium, während die Übergangsmetalle vor allem Eisen und Kobalt sind. Die Targetlegierung kann u.a. aus Terbium, Gadolinium, Dysprosium, Eisen und Kobalt bestehen. Desweiteren ist eine Targetlegierung aus Terbium, Dysprosium, Eisen und Kobalt oder aus Terbium, Gadolinium, Dysprosium und Kobalt verwendbar. Als ternäre Legierung für das Target 1 kommt auch eine Zusammensetzung aus Terbium, Dysprosium und Kobalt in Frage.

Eine quantitative Zusammensetzung der Targetlegierung hat beispielsweise die Formel

$$(Tb_xDy_{1-x})_y (Fe_zCo_{1-z})_{1-y}$$

mit

$$0 \leqq x \leqq 1,$$
$$0,15 \leqq y \leqq 0,30$$

und

$$0,60 \leqq z \leqq 1.$$

Es ergibt sich u.a. für eine ternäre Legierung, die als einziges Element der Seltenerdmetalle Terbium enthält, eine bevorzugte Zusammensetzung, wie Tb$_{0,22-0,28}$ Fe$_{0,70-0,64}$ Co$_{0,08}$ des Sputtertargets.

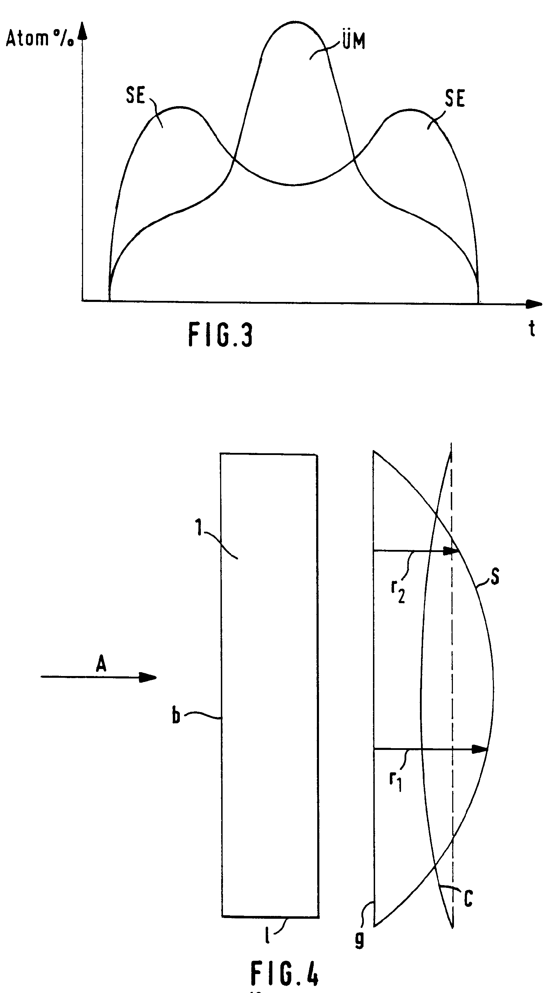

Das Target 1 wird beispielsweise als Magnetron-Sputter-Kathode in einem an sich bekannten Magnetron-Sputter-Verfahren betrieben. Das Kernstück der Magnetron-Sputter-Kathode ist ein Magnetsystem, bei dem auf einer Weicheisenplatte Magnete mit wechselnden Polen angeordnet sind. Ein Schnitt durch ein derartiges Planarmagnetron MDC ist schematisch in den Figuren 1 und 2 dargestellt. Elektrisch ist das Magnetron als Kathode geschaltet, der Substrathalter als Anode oder auf floatendem Potential. Zwischen den Elektroden befindet sich ein ionisiertes Gas, beispielsweise aus Argon, das unter einem bestimmten Druck, vorzugsweise $3 \cdot 10^{-3}$ mbar bis $2 \cdot 10^{-2}$ mbar steht. Durch den hinter dem Target angeordneten Magneten bildet sich ein inhomogenes Magnetfeld unterhalb des Targets 1 aus, das in Kombination mit dem elektrischen Feld zu einem bevorzugten Abtrag des Targets an den in Fig. 1 gekennzeichneten Sputtergräben 9, 10 führt. Darüberhinaus werden die SE-Metalle und die ÜM derart unterschiedlich abgetragen, daß die in Fig. 1 angedeuteten unterschiedlichen räumlichen Verteilungen k1, k2, k3, k4 für das Seltenerdmetall und die Übergangsmetalle auftreten. Diese unterschiedlichen räumlichen Verteilungen, weiterhin als Sputterkeulen bezeichnet, der Seltenerdmetalle und der Übergangsmetalle werden ausgenutzt, um im dynamischen Magnetronsputtern mit nur einer Kathode bzw. nur einem Target ein bestimmtes Konzentrationsprofil für die Seltenerdmetalle über der Tiefe der magnetooptischen Schicht zu erhalten. Diese Tiefenprofile der Seltenerdmetalle SE und der Übergangsmetalle ÜM sind in Figur 3 dargestellt, in der auf der Abszissenachse die Tiefe t der magnetooptischen Schicht und auf der Ordinatenachse die Atomprozente der Legierungsbestandteile aufgetragen sind. Besteht beispielsweise das Target 1 in Figur 1 aus einer Terbium-Eisen-Kobalt-Legierung, so verteilt sich Terbium gemäß den Sputterkeulen K1 und k4 in Figur 1 und die Übergangsmetalle Eisen plus Kobalt gemäß den mittleren Sputterkeulen k2 und k3. Es wird somit eine magnetooptische Schicht erhalten, die ein "M"-förmiges Terbiumkonzentrationsprofil mit zwei Spitzen erhält, wie aus dem Seltenerdmetallprofil SE in Figur 3 ersichtlich ist, während das Übergangsmetallprofil ÜM eine einzige Spitze aufweist, die jedoch die beiden Spitzen des Terbiumkonzentrationsprofils überragt.

Selbstverständlich kann die magnetooptische Schicht auch durch eine Gleichspannungsentladung in einer Dioden- oder Triodensputteranlage hergestellt werden. In einer derartigen Diodensputteranlage ist beispielsweise das zu beschichtende Substrat als Anode geschaltet, und das Target bildet hierzu die Sputterkathode. Zwischen den beiden Elektroden wird in einem Trägergas, das unter einem bestimmten Druck steht, durch Anlegen einer Spannung ein Plasma erhalten. Die im elektrischen Feld beschleunigten Ionen des Trägergases schlagen aus dem Target, das die Kathode bildet, Moleküle oder Atome heraus, die sich auf dem Substrat niederschlagen. Im allgemeinen wird das Magnetron-Sputter-Verfahren dem Diodensputterverfahren vorgezogen, da höhere Sputterraten bei verringerter Leistung im Vergleich zum Diodensputtern erzielt werden und eine weit geringere Aufheizung der Substrate auftritt, da nur wenige Elektronen auf das Substrat auftreffen, weil diese durch das Magnetfeld der Magnetronkathode abgelenkt werden.

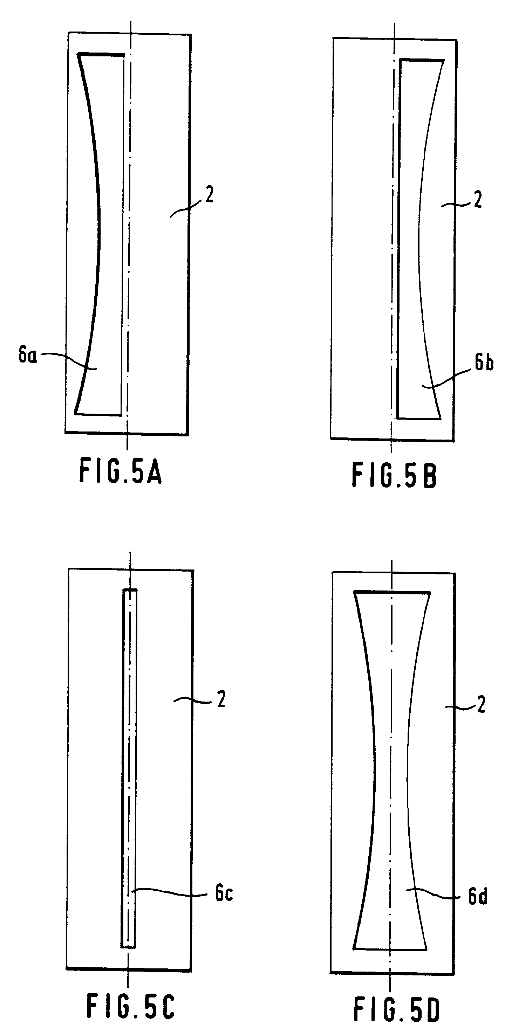

Durch die unterschiedlichen Sputterkeulen für Seltenerdmetalle und Übergangsmetalle findet sich in der Mitte der magnetooptischen Schicht eine gegenüber der durchschnittlichen Konzentration erhöhte Konzentration an Übergangsmetallen. Desweiteren gilt, daß sich an den Rändern in einer oder beiden Oberflächen der magnetooptischen Schicht eine gegenüber der durchschnittlichen Konzentration erhöhte Konzentration an Seltenerdmetallen befindet. Aus Fig. 3 ist ersichtlich, daß durch geeignete Auslegung der in den Fig. 5A bis 5D beispielhaft skizzierten Blenden, die zwischen der Kathode und dem Substrat angebracht werden, erreicht wird, daß ein M-förmiges Profil der SE Konzentration, ein Λ-förmiges und ein V-förmiges Profil der SE Konzentration auftreten kann. Ebenso ist es möglich, durch geeignetes Hintereinanderschalten von Beschichtungsstationen mit überlappenden Sputterkeulen praktisch jede Art von Konzentrationsverteilungen in der Tiefe einzustellen.

In der in Figur 2 gezeigten Ausführungsform einer Sputteranlage sind in der Sputterkammer 3 Sputterkathoden nebeneinander in einer Parallelebene zu der Bewegungsrichtung A der zu beschichtenden Substrate 3, 4 und 5 angeordnet, wobei die Sputterkathoden aus Targets 7, 1, 8 mit unterschiedlichen Legierungszusammensetzungen aus Seltenerd-Übergangsmetallen bestehen. Beispielsweise werden die Targets 7 und 8 nach dem Dioden-Sputterverfahren und das Target 1 nach dem Magnetron-Sputterverfahren betrieben. Ebenso ist es möglich, daß alle drei Targets nach dem Dioden- bzw. nach dem Magnetron-Sputterverfahren betrieben werden. Durch Verändern des Gasflusses und der Sputterleistung der einzelnen Kathoden lassen sich im im Falle des Magnetron-Sputterverfahrens die Schichtdickenprofile, d.h. die Verteilung der Legierungsbestandteile, ebenfalls einstellen. Die enge räumliche Nähe der Sputterkathoden bewirkt einen kontinuierlichen Übergang der Konzentrationen der Legierungsbestandteile. Da somit ein Konzentrationssprung in der magnetooptischen Schicht vermieden wird, sind Diffusionseffekte, die beim wiederholten Schreiben und Löschen der magnetooptischen Schicht auftreten können, und damit verbundene Veränderungen der Schreib/Leseeigenschaften, gegenüber einem Aufbau aus diskreten Lagen, reduziert.

Es können auch mehr als drei Sputterkathoden eingesetzt werden, beispielsweise dann, wenn mindestens eine Seite der magnetooptischen Schicht von einer dielektrischen Schicht abgedeckt wird. Als dielektrische Schicht kommen u.a. die voranstehend beschriebenen Sperrschichten gegen Feuchtigkeit und/oder Sauerstoff in Frage. Die Dicke dieser dielektrischen Schicht wird auf der dem Substrat zugewandten Seite ungefähr $\lambda/4 \cdot n$ gewählt, mit der Wellenlänge $\lambda$ eines Schreiblasers und dem Brechungsindex n der dielektrischen Schicht.

Das in Laufrichtung des Substrats erste Target weist z.B. einen höheren Gehalt an Übergangsmetall, insbesondere einen höheren Kobaltgehalt, auf als das, in Laufrichtung gesehen, zweite Target 7.

Auf der dem Substrat zugewandten Seite der magnetooptischen Schicht befindet sich beipielsweise eine erhöhte Konzentration von Übergangsmetallen, insbesondere eine erhöhte Kobaltkonzentration, während auf der vom Substrat abgewandten Seite der magnetooptischen Schicht die Konzentration an Seltenerdmetallen erhöht ist.

Als Sperrschicht oder Antireflexionsschicht auf der dem Substrat zugewandten Seite der magnetooptischen Schicht ergibt sich nach dem Sputtern eine Schicht aus SiN, SiON, SiAlON, AlN, AlON, $TaO_x$ oder $NbO_x$, die eine Dicke von etwa $\lambda/4n$ hat, mit dem Brechungsindex n der Schicht. Auf der vom Substrat abgewandten Seite der magnetooptischen Schicht ist die Dicke der Sperrschicht kleiner/gleich der Dicke der substratzugewandten Sperrschicht. Die Dicke der magnetooptischen Schicht beträgt 15 bis 100 nm. Ein charakteristischer Schichtaufbau lautet: Substrat/70nm±5nm(Si,N)/80nm±5nmTbFeCo/50nm±5nm(Si,N), mit einem Brechungsindex n des Siliziumnitrids der ersten (Si,N)-Schicht von 2,20±0,1 und der zweiten (Si,N)-Schicht von 2,05±0,05. Die Sperrschicht auf der substratabgewandten Seite der magnetooptischen Schicht ist z.B. eine Reflexionsschicht aus Al, Ag, Cu, Au, TiN oder ZrN. Ein derartiger Dreischichtaufbau sieht beispielsweise so aus: Substrat/70nm±5nm(Si,N)/25nm±5nmTbFeCo/50nm±5nm Reflexionsschicht. Es ist außer diesen Dreischichtaufbauten auch ein Vierschichtaufbau möglich, bei dem auf der Sperrschicht, die substratabgewandt ist, eine Reflexionsschicht aufgebracht ist.

Werden Sperrschichten auf beiden Seiten des magnetooptischen Aufzeichnungsmediums aufgebracht, so wird von Targets gesputtert, die vor dem Target 7 bzw. hinter dem Target 8 in Fig. 2 liegen. Dabei besteht das vor dem Target 7 liegende, nicht gezeigte Target beispielsweise aus Silizium, Silizium-Aluminium, Aluminium, Tantal oder Niob. Es wird das Diodensputterverfahren oder bevorzugt das Magnetron-Sputterverfahren in einer Argon- und Sauerstoff- und/oder Stickstoffatmosphäre angewandt. Auf dem Substrat 3 bildet sich zuerst eine SiN-, SiON-, SiAlON-, AlN-, AlON-, $TaO_x$- oder $NbO_x$-Schicht als Sperrschicht gegen Feuchtigkeit und/oder Sauerstoff aus.

Im darauffolgenden Verfahrensschritt wird auf dem Substrat 3, das mit einer derartigen Sperrschicht versehen ist, die Korrosionsbeständigkeit des entstehenden magnetooptischen Aufzeichnungsmediums erhöht, indem von der in Laufrichtung bzw. Bahnrichtung A der Substrate vor der Magnetron-Sputterkathode liegenden Kathode, nämlich dem Target 7, ein korrosionsverminderndes Element in größerer Konzentration aufgesputtert wird. Das Target 7 kann beispielsweise auch vollständig aus einem korrosionsverhindernden Element bestehen, bei dem es sich um Titan, Chrom, Aluminium, Platin, Zirkonium, Vanadium, Tantal, Molybdän, Wolfram, Kupfer, Ruthenium, Rhenium, Palladium, Silizium, Niob, Iridium und/oder Hafnium handeln kann. Das Target 7 kann auch zwei oder mehrere dieser Elemente in höherer Konzentration enthalten oder zur Gänze aus zwei oder mehreren dieser Elemente bestehen. Im Anschluß daran wird die magnetooptische Schicht aufgesputtert, wie sie anhand von Fig. 1 beschrieben ist. Im letzten Verfahrensschritt wird von einem Target 8 aus, das die gleiche Zusammensetzung wie das Target 7 hat, ein korrosionsverminderndes Element aufgesputtert. In einer oder beiden Oberflächen der magnetooptischen Schicht weisen das bzw. die korrosionsverhindernden Elemente nach dem Sputtern eine höhere Konzentration im Vergleich zu der durchschnittlichen Elementenkonzentration auf.

Die Targets 7, 1, 8 in Figur 2 haben untereinander etwa einen Abstand, der dem Abstand der Targets zu den zu beschichtenden Substraten entspricht. Dadurch kann es zu einem Überlappen der Sputterkeulen kommen und Schichten mit beliebiger Konzentrationsverteilung in der Schichttiefe hergestellt werden.

Um in der magnetooptischen Schicht ein Tiefenprofil der Seltenerd- und Übergangsmetalle zu erhalten, das einen unsymmetrischen Konzentrationsgradienten über der Tiefe aufweist, kann, zwischen der Ebene der Substrate und den Targets, die in der Figur 5A oder 5B schematisch gezeigte Blende angeordnet werden, die eine Blendenöffnung 6a bzw. 6b aufweist, die in bezug auf die Mitte des Sputtertargets bzw. der Sputterkathode unsymmetrisch ausgebildet ist.

Die Figuren 5A bis 5D zeigen verschiedene Ausführungsformen einer solchen Blende 2, wobei die Blende nach den Figuren 5C und 5D eine zur Mittellinie symmetrisch verlaufende Blendenöffnung 6c bzw. 6d besitzt.

In Figur 4 zeigt die Kurve S über einer Bezugslinie g die Sputterrate für ein Element, beispielsweise ein Seltenerdmetall SE an, das ohne zwischengeschaltete Blende auf das Substrat aufgebracht wird. Stellvertretend für die einzelne lokale Sputterrate sind die Werte r1, r2 eingetragen. Für die Übergangsmetalle ÜM wird eine Sputterrate gemäß der Kurve C erhalten, deren Form gegenüber der Form für die Seltenerdmetalle SE verändert ist. Das Target 1, von dem aus gesputtert wird, hat die Breite b senkrecht zur Bewegungsrichtung A und die Länge 1 in Bewegungsrichtung A der Substrate.

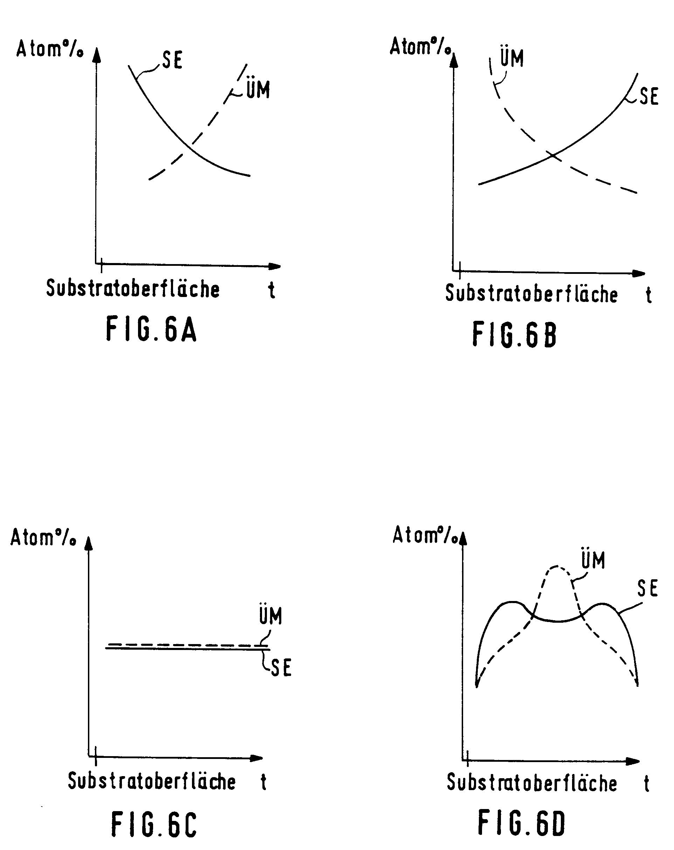

Die Kurven gemäß den Figuren 6A bis 6D geben die Konzentrationen in Atom % der Übergangsmetalle ÜM und der Seltenerdmetalle SE über der Schichttiefe der magnetooptischen Schicht wieder. In allen vier Figuren 6A bis 6D ist die Substratoberfläche auf der t-Achse markiert.

Diese Kurven werden durch Zwischenschalten der in den Fig. 5A bis 5D gezeigten Blenden zwischen dem oder den Sputtertargets und dem Substrat erhalten, wobei der jeweiligen Blende, die in den Figuren 5A bis 5D gezeigt ist, die jeweiligen Kurven gemäß den Figuren 6A bis 6D zugeordnet sind, d.h. mit der Blende 2 in Figur 5A korrespondieren die beiden Kurven in Fig. 6A, mit der Blende 2 in Fig. 5B werden die beiden Kurven der Fig. 6B erhalten und so fort. In Fig. 6A ist die Konzentration der Seltenerdmetalle SE an der Substratoberfläche am größten und nimmt mit der Schichttiefe t ab, während die Konzentration der Übergangsmetalle ÜM ab einer bestimmten Schichttiefe allmählich ansteigt. Die Kurven für die Seltenerdmetalle SE und die Übergangsmetalle ÜM in Fig. 6B verhalten sich spiegelbildlich zu den Kurven in Fig. 6A, ebenso ist die Blende in Fig. 5B zur Blende in Fig. 5A spiegelbildlich angeordnet. In Fig. 6C zeigen sowohl die Seltenerd- als auch die Übergangsmetalle eine nahezu gleiche, konstante Konzentration über die Schichttiefe, während der Verlauf der Kurven in Fig. 6D weitgehend dem Verlauf der Kurven gemäß Fig. 3 entspricht.

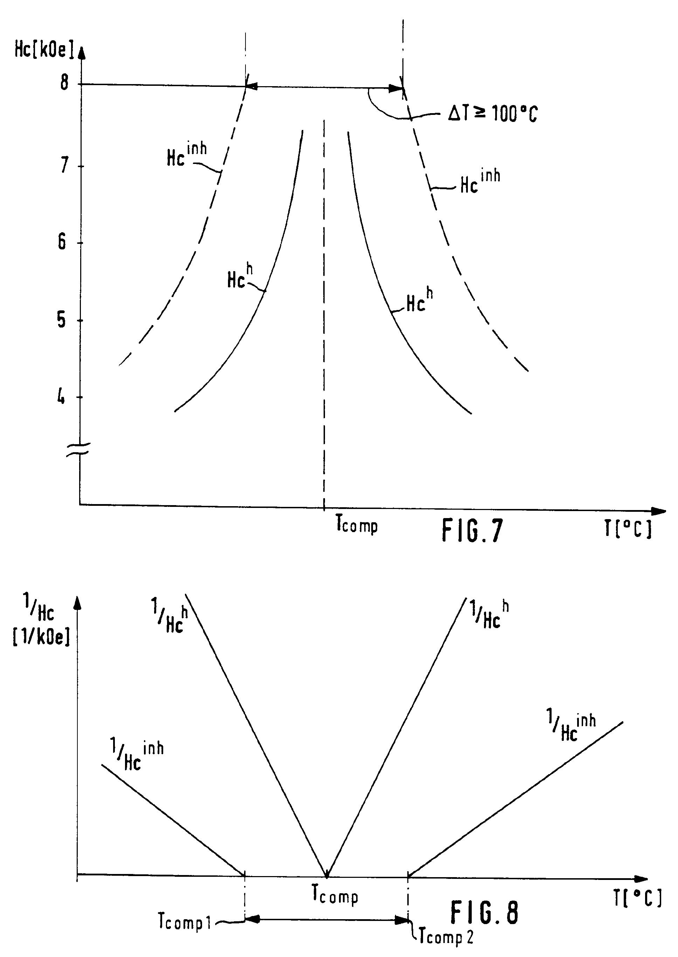

In Figur 7 sind schematisch die Koerzitivfeldstärke $H_c$ sowie die Kompensationstemperatur $T_{comp}$ über der Temperatur T einer bekannten magnetooptischen Schicht und einer Schicht nach der Erfindung dargestellt. Bei der Kompensationstemperatur $T_{comp}$ besitzt die Koerzitivfeldstärke $H_c$ ein sehr ausgeprägtes Maximum. Im allgemeinen wird die Kompensationstemperatur $T_{comp}$ einer magnetooptischen Schicht bzw. Legierung durch den Schnittpunkt der beiden Geraden $1/H_c$ erhalten, die aus den Kurven $H_c$ (T) beidseitig der Ordinate der maximalen Koerzitivfeldstärke bestimmt werden.

Die Koerzitivfeldstärke für die Schicht nach der Erfindung ist mit $H_c^{inh}$ bezeichnet, während die Koerzitivfeldstärke für die bekannte magnetooptische Schicht $H_c^h$ lautet. Die hochgestellten Indizes "h" und "inh" stehen für homogene und inhomogene Zusammensetzung der jeweiligen Legierung, wobei jedoch zu beachten ist, daß die inhomogene magnetooptische Schicht nach der Erfindung im Mittel die gleiche Zusammensetzung wie die bekannte homogene magnetooptische Schicht aufweist. Ab einer Koerzitivfeldstärke $H_c$ gleich oder größer 8kOe wird ein Temperaturintervall

$$\Delta T \ = \ T_{8kOe2} \ - \ T_{8kOe1} \geqq 100 \ °C$$

der Kompensationstemperaturen für die inhomogene Schichtzusammensetzung erhalten, wie anschließend anhand von Fig. 8 erläutert wird.

Aus Fig. 8 ist ersichtlich, daß das erfindungsgemäße Material eine Abhängigkeit $1/H_c^{inh}(T)$ in Form zweier Strahlen aufweist, die, verglichen mit den Strahlen $1/H_c^h$ (T) der bekannten Materialien wesentlich geringere Steigungen haben. Wird $1/H_c^{inh}$ von hohen Temperaturen gegen $1/H_c^{inh} = 0[1/kOe]$ extrapoliert, so ergibt sich eine Kompensationstemperatur $T_{comp2}$, während eine Extrapolation von tiefen Temperaturen eine Kompensationstemperatur $T_{comp1}$ liefert. Bei den bekannten magnetooptischen Materialien wird für beide Extrapolationen dieselbe Kompensationstemperatur $T_{comp}$ erhalten.

Der Unterschied $\Delta T = T_{8kOe2} - T_{8kOe1}$ beträgt bei dem erfindungsgemäßen Material gleich oder mehr als 100 °C, was gleichbedeutend damit ist, daß die Materialeigenschaften gegenüber Schwankungen in der Materialzusammensetzung weniger empfindlich sind als diejenigen von homogenen Materialien.

Die magnetischen Eigenschaften unterscheiden sich bei der magnetooptischen Schicht nach der Erfindung erheblich von der Doppelschicht, wie sie beispielsweise anhand von Figur 3 der EP-A2 0 225 141 beschrieben ist. Die magnetooptische Schicht nach der Erfindung weist bei der Magnetisierung nur eine einzige Hystereseschleife auf, im Gegensatz zu der Doppelschicht im Stand der Technik, die zwei voneinander getrennte Hystereseschleifen zeigt, gleichzeitig sind die magnetischen Eigenschaften der erfindungsgemäßen magnetooptischen Schicht weit weniger stark von der Legierungszusammensetzung abhängig. Wird die durchschnittliche Terbiumkonzentration durch Röntgenfluoreszenzanalyse bestimmt und mit den Schreib-/Leseeigenschaften verglichen, so zeigen Schichten mit 20 Atomprozent Terbium im Rahmen der Meßgenauigkeit das gleiche Signal-zu-Rausch-Verhältnis und die gleichen Empfindlichkeitswerte wie Schichten mit 24 Atomprozent Terbium. Im Stand der Technik ist es bisher nicht bekannt, daß der Anteil des oder der Seltenerdmetalle in der Legierung in so weiten Grenzen schwanken kann, ohne daß sich dadurch die magnetischen Eigenschaften erheblich verändern.

**Patentansprüche**

1.  Magnetooptische Schicht aus einer amorphen Seltenerd-Übergangsmetall- Legierung mit einer magnetischen Anisotropie, deren leicht magnetisierbare Achse senkrecht zu der Oberfläche steht, dadurch gekennzeichnet, daß die magnetooptische Schicht einen Gradienten der Konzentration der Zusammensetzung über der Tiefe aufweist und in einem Temperaturbereich von $\Delta T = 100°C$, der von zwei Kompensationstemperaturen $T_{comp1}$ und $T_{comp2}$ begrenzt wird, bei jeder Temperatur innerhalb dieses Bereiches eine Koerzitivfeldstärke von größer als 640 kA/m (8kOe) besitzt.

2.  Magnetooptische Schicht nach Anspruch 1, dadurch gekennzeichnet, daß die Schichtlegierung aus Terbium, Gadolinium, Dysprosium, Eisen und Kobalt besteht.

3.  Magnetooptische Schicht nach Anspruch 1, dadurch gekennzeichnet, daß die Schichtlegierung aus Terbium, Dysprosium, Eisen und Kobalt besteht.

4.  Magnetooptische Schicht nach Anspruch 1, dadurch gekennzeichnet, daß die Schichtlegierung aus Terbium, Gadolinium, Dysprosium und Kobalt besteht.

5. Magnetooptische Schicht nach Anspruch 1, dadurch gekennzeichnet, daß die Schichtlegierung aus Terbium, Dysprosium und Kobalt besteht.

6. Magnetooptische Schicht nach Anspruch 3, dadurch gekennzeichnet, daß eine Targetlegierung zum Aufsputtern der Schichtlegierung eine Zusammensetzung nach der Formel $(Tb_xDy_{1-x})_y (Fe_zCo_{1-z})_{1-y}$ hat, mit
$$0 \leqq x \leqq 1$$
$$0,15 \leqq y \leqq 0,30$$
$$0,60 \leqq z \leqq 1.$$

7. Magnetooptische Schicht nach Anspruch 1, dadurch gekennzeichnet, daß sich in einer oder beiden Oberflächen der magnetooptischen Schicht eine gegenüber der durchschnittlichen Konzentration erhöhte Konzentration an Seltenerdmetallen befindet.

8. Magnetooptische Schicht nach Anspruch 2, dadurch gekennzeichnet, daß sich in einer oder beiden Oberflächen der magnetooptischen Schicht eine gegenüber der durchschnittlichen Konzentration erhöhte Konzentration an Übergangsmetallen befindet.

9. Magnetooptische Schicht nach Anspruch 8, dadurch gekennzeichnet, daß sich auf der dem Substrat zugewandten Seite der magnetooptischen Schicht eine erhöhte Konzentration an Übergangsmetallen befindet.

10. Magnetooptische Schicht nach Anspruch 9, dadurch gekennzeichnet, daß sich auf der dem Substrat zugewandten Seite der magnetooptischen Schicht eine erhöhte Kobaltkonzentration befindet.

11. Magnetooptische Schicht nach Anspruch 9, dadurch gekennzeichnet, daß sich auf der dem Substrat abgewandten Seite der magnetooptischen Schicht eine erhöhte Konzentration an Seltenerdmetallen befindet.

12. Magnetooptische Schicht nach Anspruch 1, dadurch gekennzeichnet, daß der Schicht ein korrosionsverhinderndes Element zugesetzt ist.

13. Magnetooptische Schicht nach Anspruch 12, dadurch gekennzeichnet, daß der Schicht eines oder mehrere der Elemente Ti, Cr, Al, Pt, Zr, V, Ta, Mo, W, Cu, Ru, Rh, Pd, Nb, Ir, Hf, Si zugesetzt ist.

14. Magnetooptische Schicht nach Anspruch 13, dadurch gekennzeichnet, daß die korrosionsverhindernden Elemente eine gegenüber der durchschnittlichen Elementenkonzentration höhere Konzentration in einer oder beiden Oberflächen der magnetooptischen Schicht aufweisen.

15. Magnetooptische Schicht nach Anspruch 1, dadurch gekennzeichnet, daß sie auf mindestens einer Seite von einer dieleketrischen Schicht abgedeckt ist.

16. Magnetooptisches Aufzeichnungsmedium mit einer magnetooptischen Schicht nach den Ansprüchen 1 bis 15, dadurch gekennzeichnet, daß die magnetooptische Schicht zwischen zwei Sperrschichten aus SiN, SiON, SiAlON, AlN, AlON, $TaO_x$ oder $NbO_x$ zum Schutz gegen Feuchtigkeit und/oder Sauerstoff angeordnet ist.

17. Magnetooptisches Aufzeichnungsmedium nach Anspruch 16, dadurch gekennzeichnet, daß als Sperrschicht auf der dem Substrat zugewandten Seite eine Sperrschicht bzw. Antireflexionsschicht aus SiN, SiON, SiAlON, AlN, AlON, $TaO_x$ oder $NbO_x$ mit einer Dicke von ungefähr $\lambda/4n$ angeordnet ist.

18. Magnetooptisches Aufzeichnungsmedium nach Anspruch 17, dadurch gekennzeichnet, daß die magnetooptische Schicht eine Dicke von 15 bis 100 nm hat.

19. Magnetooptisches Aufzeichnungsmedium nach den Ansprüchen 16 bis 18, dadurch gekennzeichnet, daß die Sperrschicht auf der dem Substrat abgewandten Seite eine Dicke hat, die kleiner/gleich der Sperrschicht auf der dem Substrat zugewandten Seite ist.

20. Magnetooptisches Aufzeichnungsmedium nach den Ansprüchen 16 bis 19, dadurch gekennzeichnet, daß der Schichtaufbau Substrat/70nm±5nm(Si,N)/80nm±5nmTbFeCo/50nm±5nm(Si,N) ist, wobei der Brechungsindex n des Siliziumnitrids der ersten (Si,N)-Schicht 2,20±0,01 und der zweiten (Si,N)-Schicht 2,05±0,05 beträgt.

21. Magnetooptisches Aufzeichnungsmedium nach den Ansprüchen 17 bis 19, dadurch gekennzeichnet, daß die Sperrschicht auf der dem Substrat abgewandten Seite der magnetooptischen Schicht eine Reflexionsschicht ist.

22. Magnetooptisches Aufzeichnungsmedium nach Anspruch 21, dadurch gekennzeichnet, daß die Reflexionsschicht aus Al, Ag, Cu, Au, TiN oder ZrN besteht.

23. Magnetooptisches Aufzeichnungsmedium nach Anspruch 22, dadurch gekennzeichnet, daß der Schichtaufbau aus Substrat/70nm±5nm(Si,N)/25nm±5nmTbFeCo/50nm±5nm Reflexionsschicht besteht.

24. Magnetooptisches Aufzeichnungsmedium nach den Ansprüchen 16 bis 19, dadurch gekennzeichnet, daß auf der zweiten, dem Substrat abgewandten Sperrschicht eine Reflexionsschicht aufgebracht ist.

25. Verfahren zur Herstellung einer magnetooptischen Schicht nach Anspruch 1, bei dem das Aufsputtern der Seltenerd-Übergangsmetall-Legierung dynamisch erfolgt, indem das zu beschichtende Substrat relativ zu einem oder mehreren Sputtertargets bewegt wird, die in einer gemeinsamen Ebene angeordnet sind und bei dem eine Blende zwischen Substrat und Target(s) eingefügt wird dadurch gekennzeichnet, daß zur Erzeugung eines in der Tiefe der magnetooptischen Schicht bezüglich der parallelen Mittelebene zur Schichtoberfläche unsymmetrischen Konzentrationsgradienten die Öffnung der Blende in bezug auf die Mitte de(s)r Sputtertargets unsymmetrisch ist und die Seltenerd- und Übergangsmetalle der Sputtertargets durch ein inhomogenes Magnetfeld zusammen mit einem elektrischen Feld in unterschiedlicher räumlicher Verteilung in Gestalt von Sputterkeulen abgetragen und auf das Substrat als magnetooptische Schicht aufgesputtert werden.

26. Verfahren nach Anspruch 25, dadurch gekennzeichnet, daß die magnetooptische Schicht durch DC-Magnetronsputtern hergestellt wird.

27. Verfahren nach Anspruch 25, bei dem zumindest eines der Sputtertargets aus Seltenerdmetallen und Übergangsmetallen besteht.

28. Verfahren nach Anspruch 27, bei dem die Legierung des Sputtertargets die Zusammensetzung

$$(Tb_x Dy_{1-x})_y (Fe_z Co_{1-z})_{1-y}$$

mit

$0 \leqq x \leqq 1$

$0,15 \leqq y \leqq 0,30$

und

$0,60 \leqq z \leqq 1$

aufweist.

29. Verfahren nach Anspruch 28, dadurch gekennzeichnet, daß das Sputtertarget die Zusammensetzung

$Tb_{0,22-0,28} Fe_{0,70-0,64} Co_{0,08}$

hat.

30. Verfahren nach Anspruch 25, dadurch gekennzeichnet, daß von zwei oder mehreren Targets, die untereinander einen Abstand haben, der in etwa dem Abstand zu dem zu beschichtenden Substrat entspricht, derart auf das Substrat gesputtert wird, daß sich die Sputterkeulen überlappen.

31. Verfahren nach Anspruch 25, dadurch gekennzeichnet, daß von zwei oder mehreren Targets, die untereinander einen Abstand größer als der Abstand zu dem zu beschichtenden Substrat haben, derart auf das Substrat gesputtert wird, daß sich die Sputterkeulen nicht überlappen.

32. Verfahren nach Anspruch 30 oder 31, dadurch gekennzeichnet, daß das in Laufrichtung des Substrats erste Target einen höheren Gehalt an Übergangsmetall aufweist als das zweite Target.

**33.** Verfahren nach Anspruch 30 oder 31, dadurch gekennzeichnet, daß das in Laufrichtung des Substrats zuerst passierte Target einen höheren Gehalt an Kobalt aufweist als das zweite Target.

**34.** Verfahren nach den Ansprüchen 30 und 31, dadurch gekennzeichnet, daß mindestens eines der Kathodentargets als Magnetron und die anderen als Dioden betrieben werden.

**Revendications**

**1.** Couche magnéto-optique à base d'un alliage amorphe de terre rare-métal de transition, comportant une anisotropie magnétique, dont l'axe aisément magnétisable est perpendiculaire à la surface, caractérisée en ce que la couche magnéto-optique présente en profondeur un gradient de la concentration de la composition et, dans une plage de températures de $\Delta T = 100°C$, qui est limitée par deux températures de compensation $T_{comp1}$ et $T_{comp2}$, présente à chaque température dans cette plage une intensité de champ coercitif de plus de 640 kA/m (8 kOe).

**2.** Couche magnéto-optique selon la revendication 1, caractérisée en ce que l'alliage de la couche est constitué de terbium, gadolinium, dysprosium, fer et cobalt.

**3.** Couche magnéto-optique selon la revendication 1, caractérisée en ce que l'alliage de la couche est constitué de terbium, dysprosium, fer et cobalt.

**4.** Couche magnéto-optique selon la revendication 1, caractérisée en ce que l'alliage de la couche est constitué de terbium, gadolinium, dysprosium et cobalt.

**5.** Couche magnéto-optique selon la revendication 1, caractérisée en ce que l'alliage de la couche est constitué de terbium, dysprosium et cobalt.

**6.** Couche magnéto-optique selon la revendication 3, caractérisée en ce qu'un alliage cible, destiné à l'application par pulvérisation cathodique de l'alliage de la couche, a une composition selon la formule $(Tb_x Dy_{1-x})_y(Fe_zCo_{1-z})_{1-y}$, dans laquelle
$$0 \leqq x \leqq 1$$
$$0,15 \leqq y \leqq 0,30$$
$$0,60 \leqq z \leqq 1$$

**7.** Couche magnéto-optique selon la revendication 1, caractérisée en ce qu'une concentration élevée de terres rares, par rapport à la concentration moyenne, est présente sur une face ou sur les deux de la couche magnéto-optique.

**8.** Couche magnéto-optique selon la revendication 2, caractérisée en ce qu'une concentration élevée de métaux de transition, par rapport à la concentration moyenne, est présente sur une face ou sur les deux de la couche magnéto-optique.

**9.** Couche magnéto-optique selon la revendication 8, caractérisée en ce qu'une concentration élevée de métaux de transition est présente sur la face, tournée vers le substrat, de la couche magnéto-optique.

**10.** Couche magnéto-optique selon la revendication 9, caractérisée en ce qu'une concentration élevée de cobalt est présente sur la face, tournée vers le substrat, de la couche magnéto-optique.

**11.** Couche magnéto-optique selon la revendication 9, caractérisée en ce qu'une concentration élevée de terres rares est présente sur la face, opposée au substrat, de la couche magnéto-optique.

**12.** Couche magnéto-optique selon la revendication 1, caractérisée en ce qu'un élément empêchant la corrosion est ajouté à la couche.

**13.** Couche magnéto-optique selon la revendication 12, caractérisée en ce que l'on ajoute à la couche un ou plusieurs des éléments Ti, Cr, Al, Pt, Zr, V, Ta, Mo, W, Cu, Ru, Rh, Pd, Nb, Ir, Hf et Si.

**14.** Couche magnéto-optique selon la revendication 13, caractérisée en ce que les éléments empêchant la corrosion sont présents, sur une face ou sur les deux de la couche magnéto-optique, en une concentration supérieure à la concentration moyenne des éléments.

**15.** Couche magnéto-optique selon la revendication 1, caractérisée en ce qu'elle est recouverte, sur au moins une face, par une couche diélectrique.

**16.** Milieu d'enregistrement magnéto-optique, comportant une couche magnéto-optique selon les revendications 1 à 15, caractérisé en ce que la couche magnéto-optique est disposée entre deux couches barrière à base de SiN, SiON, SiAlON, AlN, AlON, $TaO_x$ ou $NbO_x$, pour la protection contre l'humidité et/ou l'oxygène.

**17.** Milieu d'enregistrement magnéto-optique selon la revendication 16, caractérisé en ce que, en tant que couche d'arrêt, est disposée, sur la face tournée vers le substrat, une couche d'arrêt ou une couche antiréflexion à base de SiN, SiON, SiAlON, AlN, AlON, $TaO_x$ ou $NbO_x$, ayant une épaisseur d'environ $\lambda/4n$.

**18.** Milieu d'enregistrement magnéto-optique selon la revendication 17, caractérisé en ce que la couche magnéto-optique a une épaisseur de 15 à 100 nm.

**19.** Milieu d'enregistrement magnéto-optique selon les revendications 16 à 18, caractérisé en ce que la couche d'arrêt a sur la face opposée au substrat une épaisseur qui est inférieure ou égale à celle de la couche d'arrêt sur la face tournée vers le substrat.

**20.** Milieu d'enregistrement magnéto-optique selon les revendications 16 à 19, caractérisé en ce que la structure de la couche est: substrat/(Si, N) de 70 nm±5 nm/ (TbFeCo) de 80 nm±5 nm/(Si, N) de 50 nm±5 nm, l'indice de refraction n du nitrure de silicium de la première couche (Si, N) étant égal à 2,20±0,01 et celui de la seconde couche (Si, N) étant égal à 2,05±0,05.

**21.** Milieu d'enregistrement magnéto-optique selon les revendications 17 à 19, caractérisé en ce que la couche d'arrêt sur la face, opposée au substrat, de la couche magnéto-optique, est une couche réfléchissante.

**22.** Milieu d'enregistrement magnéto-optique selon la revendication 21, caractérisé en ce que la couche réfléchissante est constituée de Al, Ag, Cu, Au, TiN ou ZrN.

**23.** Milieu d'enregistrement magnéto-optique selon la revendication 22, caractérisé en ce que la structure de la couche consiste en: substrat/(Si, N) de 70 nm±5 nm/(TbFeCo) de 25 nm ± 5 nm/couche réfléchissante de 50 nm±5 nm.

**24.** Milieu d'enregistrement magnéto-optique selon les revendications 16 à 19, caractérisé en ce qu'une couche réfléchissante est appliquée sur la seconde couche barrière opposée au substrat.

**25.** Procédé pour l'obtention d'une couche magnéto-optique selon la revendication 1, dans lequel on effectue dynamiquement la pulvérisation cathodique de l'alliage de terre rare-métal de transition en mettant en mouvement le substrat à revêtir, relativement à une ou plusieurs cibles de pulvérisation cathodique qui sont disposées dans un plan commun et en insérant un diaphragme entre substrat et cible(s), caractérisé en ce que, pour l'obtention d'un gradient de concentration dans la profondeur de la couche magnéto-optique, asymétrique par rapport aux plans moyens parallèles à la surface de la couche, l'ouverture du diaphragme est asymétrique par rapport au centre de la(des) cible(s) de pulvérisation cathodique et métaux de terre rare et de transition des cibles de pulvérisation cathodique se sont désagrégés en répartition variable dans l'espace, sous forme de lobes de pulvérisation cathodique, au moyen d'un champ magnétique inhomogène conjugué à un champ électrique, et sont appliqués, en tant que couche magnéto-optique, par pulvérisation cathodique sur le substrat.

**26.** Procédé selon la revendication 25, caractérisé en ce que la couche magnéto-optique est produite par pulvérisation cathodique au moyen d'un magnétron à courant continu.

**27.** Procédé selon la revendication 25, dans lequel au moins l'une des cibles de pulvérisation cathodique est

EP 0 383 216 B1

constituée de terres rares et de métaux de transition.

**28.** Procédé selon la revendication 27, dans lequel l'alliage de la cible de pulvérisation cathodique présente la composition

$$(Tb_xDy_{1-x})_y(Fe_zCo_{1-z})_{1-y}$$

dans laquelle
$$0 \leqq x \leqq 1$$
$$0,15 \leqq y \leqq 0,30 \text{ et}$$
$$0,60 \leqq z \leqq 1$$

**29.** Procédé selon la revendication 28, caractérisé en ce que la cible de pulvérisation cathodique a la composition

$$Tb_{0,22-0,28}Fe_{0,70-0,64}Co_{0,08}$$

**30.** Procédé selon la revendication 25, caractérisé en ce que l'on effectue la pulvérisation cathodique sur le substrat à partir de deux cibles ou plus qui se trouvent entre elles à une distance correspondant approximativement à la distance par rapport au substrat à revêtir, de manière que les lobes de pulvérisation cathodique se chevauchent.

**31.** Procédé selon la revendication 25, caractérisé en ce que l'on effectue la pulvérisation cathodique sur le substrat à partir de deux cibles ou plus qui se trouvent entre elles à une distance supérieure à la distance par rapport au substrat à revêtir, de manière que les lobes de pulvérisation cathodique ne se chevauchent pas.

**32.** Procédé selon la revendication 30 ou 31, caractérisé en ce que la première cible, dans la direction du mouvement du substrat, présente une plus forte teneur en métal de transition que la seconce cible.

**33.** Procédé selon la revendication 30 ou 31, caractérisé en ce que la cible passée en premier lieu dans la direction du mouvement du substrat présente une plus forte teneur en cobalt que la seconde cible.

**34.** Procédé selon les revendications 30 et 31, caractérisé en ce que l'on fait fonctionner au moins l'une des cibles cathodiques en tant que magnétron et les autres en tant que diodes.

## Claims

**1.** A magnetooptic layer made from an amorphous rare-earth/transition metal alloy having a magnetic anisotropy, the easily magnetizable axis of which is perpendicular to the surface, wherein the magnetooptic layer exhibits a gradient in the concentration of the composition with depth and has a coercive field strength of more than 640 kA/m (8 kOe) at any temperature within a temperature range of $\Delta T = 100°C$ which is delimited by two compensation temperatures $T_{comp1}$ and $Temp_{comp2}$.

**2.** The magnetooptic layer as claimed in claim 1, wherein the layer alloy consists of terbium, gadolinium, dysprosium, iron and cobalt.

**3.** The magnetooptic layer as claimed in claim 1, wherein the layer alloy consists of terbium, dysprosium, iron and cobalt.

**4.** The magnetooptic layer as claimed in claim 1, wherein the layer alloy consists of terbium, gadolinium, dysprosium and cobalt.

**5.** The magnetooptic layer as claimed in claim 1, wherein the layer alloy consists of terbium, dysprosium and cobalt.

**6.** The magnetooptic layer as claimed in claim 3, wherein a target alloy for the sputtering-on of the layer alloy has a composition according to the formula $(Tb_xDy_{1-x})_y(Fe_zCo_{1-z})_{1-y}$, where
$$0 \leqq x \leqq 1,$$
$$0.15 \leqq y \leqq 0.30$$

**12**

$$0.60 \leqq z \leqq 1.$$

7. The magnetooptic layer as claimed in claim 1, wherein there is present in one or both surfaces of the magnetooptic layer a concentration of rare-earth metals which is enhanced by comparison with the average concentration.

8. The magnetooptic layer as claimed in claim 2, wherein there is present in one or both surfaces of the magnetooptic layer a concentration of transition metals which is enhanced by comparison with the average concentration.

9. The magnetooptic layer as claimed in claim 8, wherein there is present on the side of the magnetooptic layer facing the substrate an enhanced concentration of transition metals.

10. The magnetooptic layer as claimed in claim 9, wherein there is present on the side of the magnetooptic layer facing the substrate an enhanced cobalt concentration.

11. The magnetooptic layer as claimed in claim 9, wherein there is present on the side of the magnetooptic layer averted from the substrate an enhanced concentration of rare-earth metals.

12. The magnetooptic layer as claimed in claim 1, wherein an anticorrosive element is added to the layer.

13. The magnetooptic layer as claimed in claim 12, wherein one or a plurality of the elements Ti, Cr, Al, Pt, Zr, V, Ta, Mo, W, Cu, Ru, Rh, Pd, Nb, Ir, Hf, Si are added to the layer.

14. The magnetooptic layer as claimed in claim 13, wherein by comparison with the average concentration of elements, the anticorrosive elements exhibit a higher concentration in one or both surfaces of the magnetooptic layer.

15. The magnetooptic layer as claimed in claim 1, wherein said layer is covered on at least one side by a dielectric layer.

16. The magnetooptic recording medium having a magnetooptic layer as claimed in claims 1 to 15, wherein the magnetooptic layer is arranged between two barrier layers made from SiN, SiON, SiAlON, AlN, AlON, $TaO_x$ or $NbO_x$ for protection against dampness and/or oxygen.

17. The magnetooptic recording medium as claimed in claim 16, wherein there is arranged as barrier layer on the side facing the substrate a barrier layer or antireflective layer made from SiN, SiON, SiAlON, AlN, AlON, $TaO_x$ or $NbO_x$ with a thickness of approximately $\lambda/4n$.

18. The magnetooptic recording medium as claimed in claim 17, wherein the magnetooptic layer has a thickness of 15 to 100 nm.

19. The magnetooptic recording medium as claimed in claims 16 to 18, wherein the barrier layer on the side averted from the substrate has a thickness which is smaller than/equal to the barrier layer on the side facing the substrate.

20. The magnetooptic recording medium as claimed in claims 16 to 19, wherein the layer construction is substrate/70nm±5nm(Si,N)/80nm±5nmTbFeCo/50nm±5nm(Si,N), the refractive index n of the silicon nitride of the first (Si,N) layer being 2.20±0.01, and of the second (Si,N) layer being 2.05±0.05.

21. The magnetooptic recording medium as claimed in claims 17 to 19, wherein the barrier layer on the side of the magnetooptic layer averted from the substrate is a reflective layer.

22. The magnetooptic recording medium as claimed in claim 21, wherein the reflective layer consists of Al, Ag, Cu, Au, TiN or ZrN.

23. The magnetooptic recording medium as claimed in claim 22, wherein the layer construction consists of substrate/70nm±5nm(Si,N)/25nm±5nmTbFeCo/50nm±5nm reflective layer.

**24.** The magnetooptic recording medium as claimed in claims 16 to 19, wherein a reflective layer is applied to the second barrier layer, which is averted from the substrate.

**25.** A process for the fabrication of a magnetooptic layer as claimed in claim 1, in which the rare-earth/transition metal alloy is sputtered on dynamically by transporting the substrate to be coated relative to one or a plurality of sputter targets which are arranged in a common plane, and in which a mask is inserted between substrate and target(s), wherein, in order to produce a concentration gradient which, in the depth of the magnetooptic layer, is asymmetrical in relation to the center plane running parallel to the layer surface, the opening of the mask is asymmetrical in relation to the center of the sputter target(s), and, due to an inhomogeneous magnetic field together with an electric field, the rare-earth metals and transition metals of the sputter targets are eroded in different spatial distribution in the form of sputter lobes and sputtered onto the substrate as magnetooptic layer.

**26.** The process as claimed in claim 25, wherein the magnetooptic layer is fabricated by DC magnetron sputtering.

**27.** The process as claimed in claim 25, wherein at least one of the sputter targets consists of rare-earth metals and transition metals.

**28.** The process as claimed in claim 27, wherein the alloy of the sputter target exhibits the composition
$$(Tb_xDy_{1-x})_y (Fe_zCo_{1-z})_{1-y}$$
where
$$0 \leq x \leq 1,$$
$$0.15 \leq y \leq 0.30$$
and
$$0.60 \leq z \leq 1.$$

**29.** The process as claimed in claim 28, wherein the sputter target has the composition
$$Tb_{0.22-0.28}Fe_{0.70-0.64}Co_{0.08}.$$

**30.** The process as claimed in claim 25, wherein sputtering is done onto the substrate from two or more targets, which have a mutual spacing which corresponds approximately to the spacing from the substrate to be coated, in such a way that the sputter lobes overlap.

**31.** The process as claimed in claim 25, wherein sputtering is done onto the substrate from two or more targets, which have a mutual spacing greater than the spacing from the substrate to be coated, in such a way that the sputter lobes do not overlap.

**32.** The process as claimed in claim 30 or 31, wherein the first target in the direction of travel of the substrate exhibits a higher content of transition metal than the second target.

**33.** The process as claimed in claims 30 or 31, wherein the target first passed in the direction of travel of the substrate exhibits a higher content of cobalt than the second target.

**34.** The process as claimed in claims 30 and 31, wherein at least one of the cathode targets is operated as a magnetron, and the others as diodes.

F I G. 1

F I G. 2

FIG.3

FIG.4

FIG.5A

FIG.5B

FIG.5C

FIG.5D

FIG.6A

FIG.6B

FIG.6C

FIG.6D

FIG.7

FIG.8